(19) Europäisches Patentamt
European Patent Office
Office européen des brevets

(11) **EP 4 336 450 A1**

(12) **EUROPEAN PATENT APPLICATION**

(43) Date of publication:
**13.03.2024  Bulletin 2024/11**

(21) Application number: **22194639.5**

(22) Date of filing: **08.09.2022**

(51) International Patent Classification (IPC):
**G06T 7/73** (2017.01)

(52) Cooperative Patent Classification (CPC):
**G06T 7/73;** G06T 2207/10116; G06T 2207/20084;
G06T 2207/30008

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **KOEPNICK, Johannes**
  **Eindhoven (NL)**
• **MAY, Jan Marek**
  **Eindhoven (NL)**

• **LUNDT, Bernd**
  **5656AG Eindhoven (NL)**
• **BRUECK, Heiner Matthias**
  **5656AG Eindhoven (NL)**
• **GOOßEN, Andre**
  **Eindhoven (NL)**
• **BYSTROV, Daniel**
  **Eindhoven (NL)**
• **KROENKE-HILLE, Sven**
  **Eindhoven (NL)**
• **YOUNG, Stewart Matthew**
  **Eindhoven (NL)**

(74) Representative: **Philips Intellectual Property & Standards**
**High Tech Campus 52**
**5656 AG Eindhoven (NL)**

(54) **PROVIDING POSE INFORMATION FOR X-RAY PROJECTION IMAGES**

(57)     A computer-implemented method of providing pose information for X-ray projection images, is provided. The method includes segmenting an X-ray projection image (120) to identify a plurality of projected sub-regions ($150_{1..m}$) of an anatomical structure, generating a pose metric for the X-ray projection image (120) based on a relative size of two or more of the projected sub-regions ($150_{1..m}$) in the segmented X-ray projection image (120), and outputting the pose metric to provide the pose information for the X-ray projection image (120).

FIG. 5

**Description**

TECHNICAL FIELD

The present disclosure relates to providing pose information for X-ray projection images. A computer-implemented method, a computer program product, and a system, are disclosed.

BACKGROUND

Projection X-ray imaging systems include an X-ray source and an X-ray detector. The X-ray source and the X-ray detector are separated by an examination region. An anatomical structure such as an ankle, a leg, or another part of a subject's body, may be disposed in the examination region in order to generate X-ray projection images of the anatomical structure. X-ray projection images are acquired by a projection X-ray imaging system that has a defined pose with respect to the anatomical structure. X-ray projection images are acquired using a single pose of the X-ray imaging system with respect to the anatomical structure, and so it is important that the pose that is used provides the desired information in the resulting X-ray projection images. For instance, the diagnosis of a fractured ankle bone may require the bone to be imaged using a pose in which the fracture is not obscured by other bones in the ankle. If an unsuitable pose is used, a repeat image may need to be acquired.

The positioning of anatomical structures with respect to projection X-ray imaging systems is conventionally performed manually, and in accordance with a protocol for the anatomical structure. A radiographer positions the anatomical structure by eye, and generates an initial image. If the initial image is unacceptable, the radiographer re-positions the anatomical structure based on their experience, and generates another image. This procedure may be repeated several times until an acceptable image is obtained, sometimes with only a marginal improvement in the resulting image. This approach therefore increases the amount of X-ray dose that is delivered to a subject, and also hampers workflow.

A document US 2019/183438 A1 describes a method for ensuring correct positioning for a radiography recording. The method includes providing an examination request of the body region; pre-positioning the body region in the radiography system for the radiography recording; pre-positioning at least one of a recording unit of the radiography system and an image detector of the radiography system for the radiography recording; producing a positioning recording of the body region via the radiography system, the radiography system being switched into the fluoroscopy mode and the positioning recording being a fluoroscopy recording; producing positioning information from the positioning recording; and outputting the positioning information.

However, there remains a need for improvements in the positioning of anatomical structures with respect to projection X-ray imaging systems.

SUMMARY

According to one aspect of the present disclosure, a computer-implemented method of providing pose information for X-ray projection images, is provided. The method comprises:

receiving X-ray projection data, the X-ray projection data comprising an X-ray projection image representing an anatomical structure, the X-ray projection data being acquired by a projection X-ray imaging system having a corresponding pose with respect to the anatomical structure;
segmenting the X-ray projection image to identify a plurality of projected sub-regions of the anatomical structure;

generating a pose metric for the X-ray projection image based on a relative size of two or more of the projected sub-regions in the segmented X-ray projection image; and
outputting the pose metric to provide the pose information for the X-ray projection image.

In the above method, a pose metric is generated for an X-ray projection image. The pose metric is generated based on a relative size of two or more projected sub-regions in the segmented X-ray projection image. The inventors have observed that this relative size serves as a reliable metric for the pose of the projection X-ray imaging system with respect to the anatomical structure. An operator may use the pose metric for various purposes, such as for example to determine the pose of the projection X-ray imaging system with respect to the anatomical structure, or to assess a suitability of the pose for acquiring the X-ray projection image, or to determine how to adjust the projection X-ray imaging system pose in order to acquire an improved X-ray projection image of the anatomical structure. Consequently, the method facilitates a reduction in the amount of X-ray dose that is delivered to a subject by reducing the number of X-ray image acquisitions that are repeated. The method also facilitates an improvement in workflow.

Further aspects, features, and advantages of the present disclosure will become apparent from the following description of examples, which is made with reference to the accompanying drawings.

BRIEF DESCRIPTION OF THE DRAWINGS

Fig. 1 is an example of an X-ray projection image 120 representing an anatomical structure, in accordance with some aspects of the present disclosure.
Fig. 2 is a flowchart illustrating an example of a method of providing pose information for X-ray projection images, in accordance with some aspects of the present disclosure.

Fig. 3 is a schematic diagram illustrating an example of a system 200 for providing pose information for X-ray projection images, in accordance with some aspects of the present disclosure.

Fig. 4 is a schematic diagram illustrating an example of a projection X-ray imaging system 140 having a pose, P, with respect to an anatomical structure 130, in accordance with some aspects of the present disclosure.

Fig. 5 is an example of a segmented X-ray projection image 120 and includes examples of projected sub-regions $150_{1..m}$ of an anatomical structure, in accordance with some aspects of the present disclosure.

Fig. 6 illustrates three examples of segmented X-ray projection images $120_{1..3}$ that include examples of projected sub-regions $150_{1..m}$ of an anatomical structure, and which have been acquired from different poses $P_1$ (Fig. 6a), $P_2$ (Fig. 6b) and $P_3$ (Fig. 6c) of a projection X-ray imaging system with respect to the anatomical structure, in accordance with some aspects of the present disclosure.

Fig. 7 is an example of a segmented X-ray projection image 120 and includes examples of projected sub-regions $150_{1..m}$ of an anatomical structure, and examples of the positions of a plurality of anatomical landmarks $160_{1..n}$, in accordance with some aspects of the present disclosure.

Fig. 8 is a schematic diagram illustrating an example of a method of providing pose information for X-ray projection images and wherein X-ray projection data 110 comprising an X-ray projection image is inputted into a first neural network NN1 in order to segment the X-ray projection image, and wherein segmented image data representing the segmented image, is inputted into a second neural network NN2 in order to generate a pose metric for the X-ray projection image, in accordance with some aspects of the present disclosure.

DETAILED DESCRIPTION

Examples of the present disclosure are provided with reference to the following description and figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer implemented method, may be implemented in a system, and in a computer program product, in a corresponding manner.

In the following description, reference is made to examples of methods in which a projection X-ray imaging system is used to acquire X-ray projection images representing an anatomical structure. By way of some examples, the projection X-ray imaging system may be the DigitalDiagnost C90, or the Philips Azurion 7, or the MobileDiagnost M50 mobile digital X-ray system, all of which are marketed by Philips Healthcare, Best, the Netherlands. However, it is to be appreciated that these serve only as examples, and that the projection X-ray imaging system may in general be provided by any type of projection X-ray imaging system.

In some examples, arrangements of X-ray imaging systems are described in which an X-ray source of the projection X-ray imaging system is mounted to a ceiling via a gantry, and a corresponding X-ray detector is mounted to a stand and held in the vertical position. This type of arrangement may be used by the DigitalDiagnost C90 imaging system mentioned above. However, it is to be appreciated that this arrangement serves only as an example, and that the X-ray source and the X-ray detector of the projection X-ray imaging system may alternatively be arranged in a different manner. For instance, the X-ray source may be mounted to a stand, or to an articulating arm, and the X-ray detector may be mounted to the ceiling, or to an articulating arm and held in a different position. An arrangement may alternatively be used wherein the X-ray source and the X-ray detector are mounted to a common support structure. Such an arrangement is used in the Philips Azurion 7 projection X-ray imaging system mentioned above. In this example the support structure is a so-called C-arm. Other arrangements may alternatively be used in which the X-ray source and the X-ray detector are mounted to a common support structure that has a different shape to a C-arm, including arrangements wherein the support structure is provided by a so-called "O-arm". Other arrangements may alternatively be used wherein the X-ray source and the X-ray detector are mounted, or supported, in a different manner, including portable X-ray imaging systems such as the MobileDiagnost M50 mobile digital X-ray system mentioned above.

In the following description, reference is made to examples of methods that involve the acquisition of X-ray projection images representing an anatomical structure. In some examples, the anatomical structure is an ankle. However, it is to be appreciated that the ankle serves only as an example, and that in general the methods disclosed herein may be used to acquire X-ray projection images that represent any anatomical structure in the body of a subject. It is also to be appreciated that whilst the following description makes reference to examples of methods in which a pose metric is generated for a single X-ray projection image, the methods may similarly be used to generate a pose metric for each of multiple images. The methods may for example be used to provide a pose metric for a temporal sequence of images and wherein the pose metric changes in response to changes in the pose of the projection X-ray imaging system during the sequence.

In the following description, reference is made to various methods that are implemented by a computer, i.e. by a processor. It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray™ and DVD.

As mentioned above, there remains a need for improvements in the positioning of anatomical structures with respect to projection X-ray imaging systems.

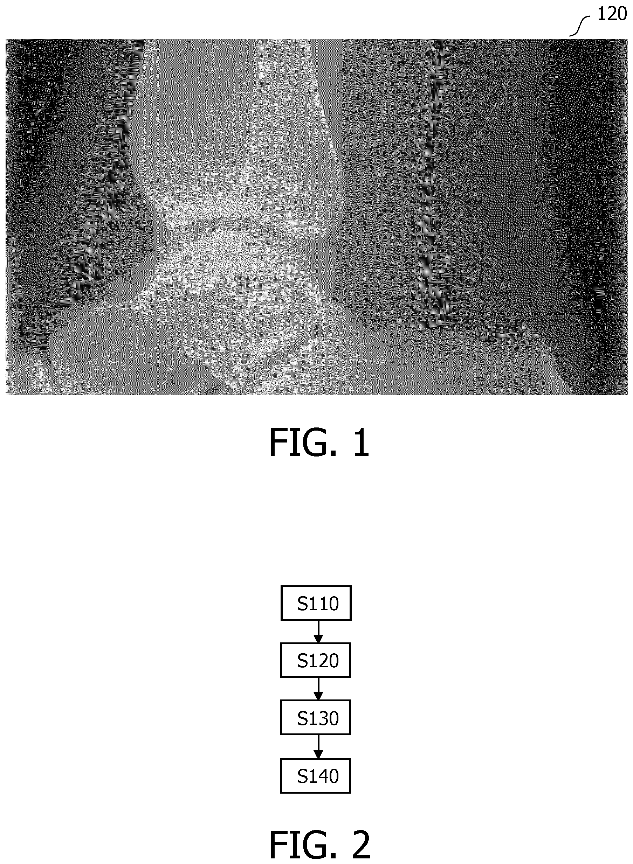

Fig. 1 is an example of an X-ray projection image 120 representing an anatomical structure, in accordance with some aspects of the present disclosure. A radiographer may acquire an image such as the image illustrated in Fig. 1 during a clinical investigation for the presence of a fractured bone in the ankle, for example. However, as mentioned above, a drawback of such projection X-ray images is the need for their acquisition using a projection X-ray imaging system that has a suitable pose with respect to the anatomical structure. This is a consequence of projection X-ray images being generated by projecting the attenuation arising from a three-dimensional object onto the surface of a two-dimensional X-ray detector. If the projection X-ray imaging system used to acquire the image illustrated in Fig. 1 were to have an unsuitable pose with respect the ankle, the fracture might be obscured by other bones in the ankle. This might result in the need to acquire another image, which increases the amount of X-ray dose that is delivered to a subject, and also hampers workflow.

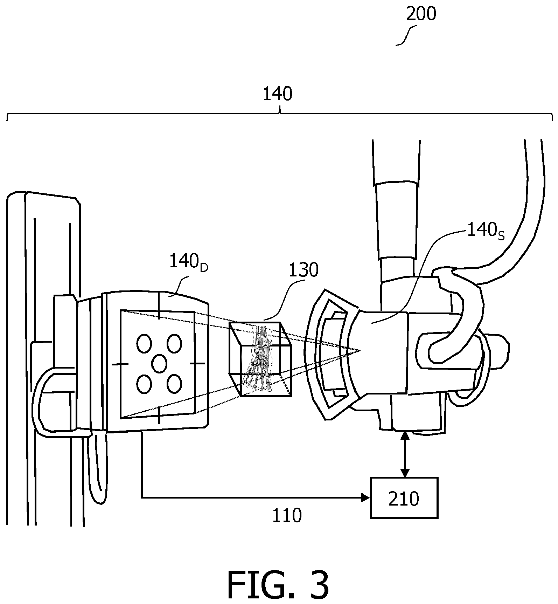

Fig. 2 is a flowchart illustrating an example of a method of providing pose information for X-ray projection images, in accordance with some aspects of the present disclosure. Fig. 3 is a schematic diagram illustrating an example of a system 200 for providing pose information for X-ray projection images, in accordance with some aspects of the present disclosure. The system 200 includes one or more processors 210. Operations described in relation to the method illustrated in Fig. 2, may also be performed by the one or more processors 210 of the system 200 illustrated in Fig. 3. Likewise, operations described in relation to the one or more processors 210 of the system 200, may also be performed in the method described with reference to Fig. 2. With reference to Fig. 2, the computer-implemented method of providing pose information for X-ray projection images, includes:

receiving S110 X-ray projection data 110, the X-ray projection data comprising an X-ray projection image 120 representing an anatomical structure 130, the X-ray projection data being acquired by a projection X-ray imaging system 140 having a corresponding pose, P, with respect to the anatomical structure 130;
segmenting S120 the X-ray projection image 120 to identify a plurality of projected sub-regions $150_{1..m}$ of the anatomical structure 130;
generating S130 a pose metric for the X-ray projection image 120 based on a relative size of two or more of the projected sub-regions $150_{1..m}$ in the segmented X-ray projection image 120; and
outputting S140 the pose metric to provide the pose information for the X-ray projection image 120.

In the above method, a pose metric is generated for an X-ray projection image. The pose metric is generated based on a relative size of two or more projected sub-regions in the segmented X-ray projection image. The inventors have observed that this relative size serves as a reliable metric for the pose of the projection X-ray imaging system with respect to the anatomical structure. An operator may use the pose metric for various purposes, such as for example to determine the pose of the projection X-ray imaging system with respect to the anatomical structure, or to assess a suitability of the pose for acquiring the X-ray projection image, or to determine how to adjust the projection X-ray imaging system pose in order to acquire an improved X-ray projection image of the anatomical structure. Consequently, the method facilitates a reduction in the amount of X-ray dose that is delivered to a subject by reducing the number of X-ray image acquisitions that are repeated. The method also facilitates an improvement in workflow.

With reference to the method illustrated in Fig. 2, in the operation S110, X-ray projection data 110 is received. The X-ray projection data comprises an X-ray projection image 120 representing an anatomical structure 130. The X-ray projection data is acquired by a projection X-ray imaging system 140 that has a corresponding pose, P, with respect to the anatomical structure 130.

A projection X-ray imaging system includes an X-ray source and an X-ray detector. The X-ray source and the X-ray detector are held in a static position with respect to an anatomical structure during the acquisition of the X-ray projection data. The projection X-ray imaging system may be said to have a pose with respect to the anatomical structure during the acquisition of the X-ray projection data. The X-ray projection data is acquired using a single pose of the projection X-ray imaging system with respect to the anatomical structure. The X-ray projection data may be used to generate an X-ray projection image, i.e. a two-dimensional image, representing the anatomical structure. The X-ray projection data that is acquired by a projection X-ray imaging system contrasts with the volumetric X-ray data that is generated by a computed tomography "CT" imaging system. In a CT imaging system, an X-ray source and X-ray detector are rotated around an anatomical structure in order to acquire volumetric X-ray data from each of multiple poses of the CT imaging system with respect to an anatomical structure. The volumetric X-ray data is subsequently reconstructed into a three-dimensional, or volumetric, image of the anatomical structure.

The X-ray projection data 110 that is received in the operation S110 may be received from various sources. For example, the X-ray projection data 110 may be received from a projection X-ray imaging system, such as the projection X-ray imaging system 140 illustrated in Fig. 3. In this example, the X-ray projection data 110 may be received by the one or more processors 210 of the system 200 illustrated in Fig. 3. Instead of being received from a projection X-ray imaging system, the X-ray projection data 110 may be received from another source, such as a computer readable storage medium, or the Internet or the Cloud, for example. Thus, the X-ray projection data 110 may have been acquired by a projection X-ray imaging system at an earlier point in time, and subsequently received in the operation S110 from the computer readable storage medium, or the Internet or the Cloud. In general, the X-ray projection data 110 that is received in the operation S110 may be received via any form of data communication, including wired, optical, and wireless communication. By way of some examples, when wired or optical communication is used, the communication may take place via signals transmitted on an electrical or optical cable, and when wireless communication is used, the communication may take place via RF or optical signals.

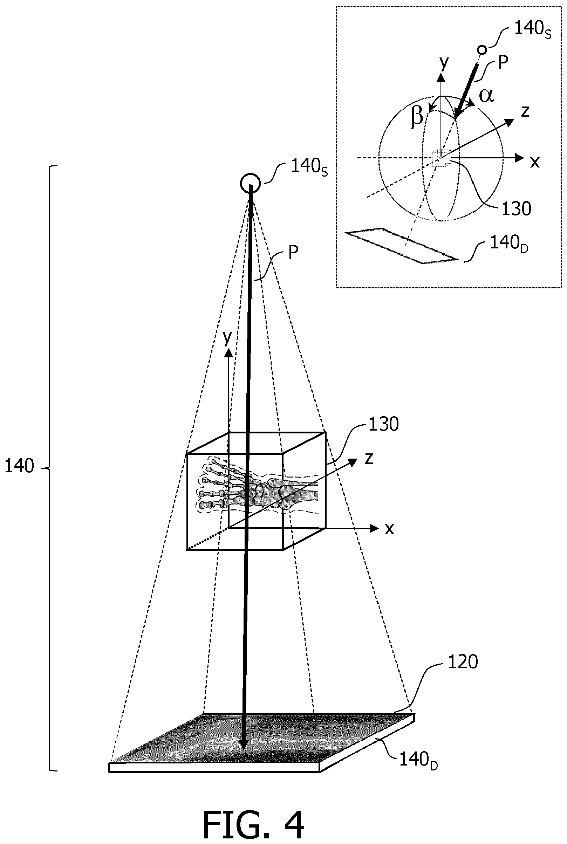

As mentioned above, the X-ray projection data 110 is acquired by a projection X-ray imaging system 140 that has a corresponding pose, P, with respect to the anatomical structure 130. Fig. 4 is a schematic diagram illustrating an example of a projection X-ray imaging system 140 having a pose, P, with respect to an anatomical structure 130, in accordance with some aspects of the present disclosure. The projection X-ray imaging system 140 illustrated in Fig. 4 corresponds to the projection X-ray imaging system 140 illustrated in Fig. 3, and includes an X-ray source $140_S$, and an X-ray detector $140_D$. An example of an anatomical structure is also illustrated in Fig. 3 and Fig. 4 in the form of an ankle. In both Fig. 3 and Fig. 4, X-ray projection data for the ankle is acquired by detecting with the X-ray detector $140_D$, X-ray radiation that is emitted by the X-ray source $140_S$ and which has passed through the ankle. The X-ray projection data represents a line integral of the ankle's X-ray attenuation along paths between the X-ray source $140_S$ and the X-ray detector $140_D$.

The pose, P, of the X-ray imaging system 140 with respect to the ankle is illustrated via the orientation of the thick dark arrow in Fig. 4 with respect to the ankle. In the illustrated example, the pose, P, is defined by the orientation of a central ray of the projection X-ray imaging system 140 with respect to the anatomical structure. The diagram within the dashed-outline box at the top right-hand side of Fig. 4 illustrates a generalized pose, P, of the projection X-ray imaging system 140 with respect to the anatomical structure 130. In this inset diagram, the pose, P, is defined by the angles a and b with respect to a coordinate system of the anatomical structure 130. By way of an example, the angle a may be defined as a rotational angle of the central ray of the projection X-ray imaging system 140 around a longitudinal axis of the subject, and the angle b may be defined as a tilt angle of the central ray of the projection X-ray imaging system 140 with respect to a cranial-caudal axis of the subject.

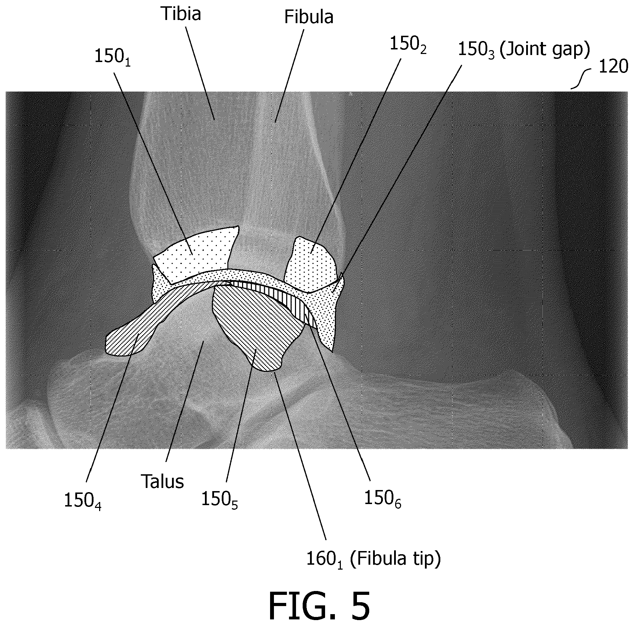

Returning back to the method illustrated in Fig. 2; in the operation S120 the X-ray projection image 120 is segmented in order to identify a plurality of projected sub-regions $150_{1..m}$ of the anatomical structure 130. Fig. 5 is an example of a segmented X-ray projection image 120 and includes examples of projected sub-regions $150_{1..m}$ of an anatomical structure, in accordance with some aspects of the present disclosure. In the illustrated example, the segmentation has resulted in a delineation of the projected sub-regions $150_{1..m}$ of the ankle. These include: a first projected region of the Tibia $150_1$, a second projected region of the Tibia $150_2$, a projected joint gap $150_3$ between the Tibia and the Talus, a first articulating surface of the Talus $150_4$, an overlap between the Fibula and the Talus $150_5$, and a second articulating surface of the Talus $150_6$.

In general, the projected sub-regions $150_{1..m}$ of the anatomical structure 130 that are identified by the segmentation operation 120 represent one or more of: a portion of a bone $150_{1..2}$, $150_{4..6}$ and a space between two bones $150_3$. In general, a portion of a bone may include a portion of the diaphysis of the bone, i.e. the shaft, or a portion of the metaphysis, or a portion of the epiphysis. Examples of portions of a bone that may be identified as projected sub-regions in the operation S 120 include projections of the perimeters of the bones, and also projections of facets of the bone, such as a projection of an articulating surface of the bone. In the example illustrated in Fig. 5, the projected sub-regions $150_{1..m}$ represent portions of the Tibia, i.e. $150_{1..2}$, portions of the Fibula, i.e. $150_5$, and portions of the Talus, i.e. $150_4$ and $150_6$. Items $150_4$ and $150_6$ in Fig. 5 are examples of projections of articulating surfaces of a bone, i.e. the first articulating surface of the Talus $150_4$ and second articulating surface of the Talus $150_6$. Item $150_3$ in Fig. 5 is an example of a projection of a space between two bones, i.e. the projected joint gap $150_3$ between the Tibia and the Talus.

The projected sub-regions $150_{1..m}$ may be defined in various ways. In one example, at least one of the two or more projected sub-regions is defined at least in part by a perimeter of a portion of at least one of the bones in the X-ray projection image $150_{1..6}$. For instance, in Fig. 5, the projected sub-region $150_1$ is defined at least at its upper, left-hand, and lower extremities by a perimeter of a facet of a bone, more specifically an articulating surface of the Tibia. Similarly, the projected sub-region $150_2$ is defined at least at its upper, right-hand, and lower extremities by a perimeter of a facet of a bone, more specifically an articulating surface of the Tibia. In another example, at least one of the two or more projected sub-regions is defined at least in part by an intersection between a plurality of bones in the X-ray projection image. For instance, in Fig. 5, the projected sub-region $150_1$ is defined at least at its right-hand extremity by an intersection between the Fibula and the Tibia. Similarly, the projected sub-region $150_2$ is defined at least at its left-hand extremity by an intersection between the Fibula and the Tibia. In another example, at least one of the two or more projected sub-regions is defined at least in part by an intersection between a space between two bones $150_3$ and a further bone in the X-ray projection image 120. Whilst this is not illustrated explicitly in Fig. 5, a projected sub-region in accordance with this example might be defined by an intersection between the joint gap $150_3$ and the Fibula. A projected sub-region may also be defined by a combination of these examples.

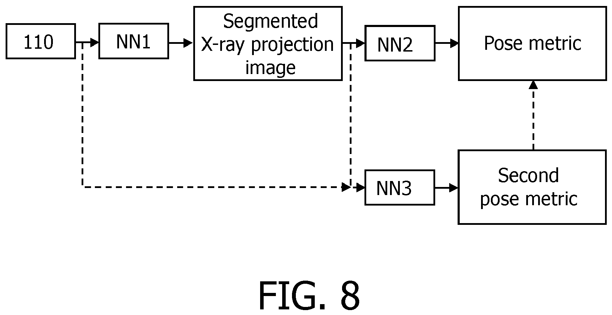

The operation S120 in which the X-ray projection image 120 is segmented in order to identify the plurality of projected sub-regions $150_{1..m}$ of the anatomical structure 130, may be performed using various techniques. One example technique involves applying a segmentation algorithm to the received X-ray projection data 110. Segmentation algorithms such as model-based segmentation, watershed-based segmentation, region growing, level sets or graph cuts, may be used for this purpose. Another example technique involves inputting the received X-ray projection data 110 into a neural network that is trained to segment X-ray projection images representing the anatomical structure 130. An example of such a neural network is the first neural network NN1 that is described later with reference to Fig. 8. An example of a neural network that may be used to segment X-ray projection images in the operation S120 is disclosed in a document by Kroenke, S., et al., "CNN-based pose estimation for assessing quality of ankle-joint X-ray images", Proc. SPIE 12032, Medical Imaging 2022: Image Processing, 120321A (2022).

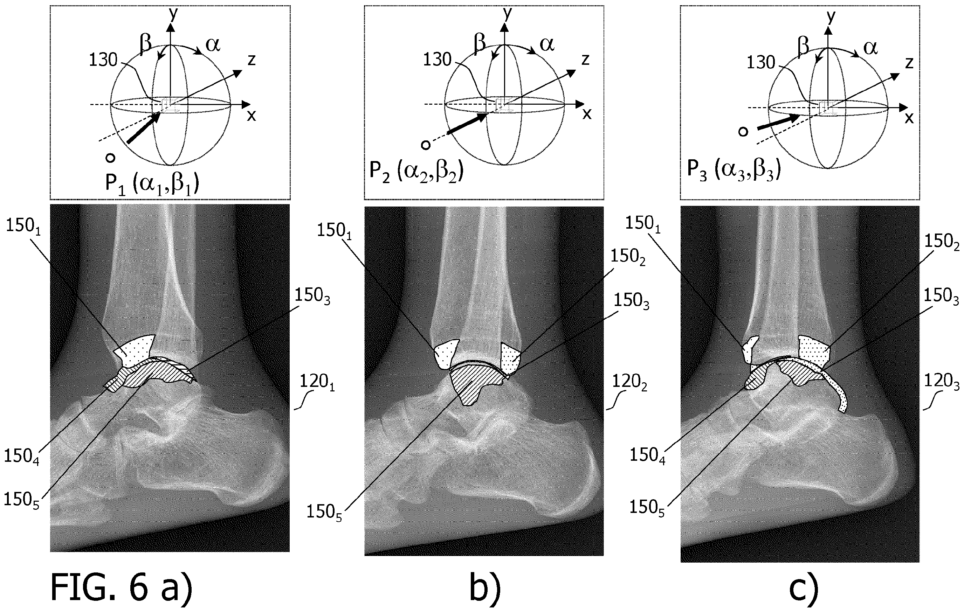

Referring back to the method illustrated in Fig. 2; in the operation S130, a pose metric for the X-ray projection image 120 is generated based on a relative size of two or more of the projected sub-regions $150_{1..m}$ in the segmented X-ray projection image 120. As mentioned above, the inventors have observed that this relative size serves as a reliable metric for the pose of the projection X-ray imaging system with respect to the anatomical structure. This principle is described with reference to Fig. 6, which illustrates three examples of segmented X-ray projection images $120_{1..3}$ that include examples of projected sub-regions $150_{1..m}$ of an anatomical structure, and which have been acquired from different poses $P_1$ (Fig. 6a), $P_2$ (Fig. 6b) and $P_3$ (Fig. 6c) of a projection X-ray imaging system with respect to the anatomical structure, in accordance with some aspects of the present disclosure.

In the upper portion of Fig. 6, the diagrams within the dashed-outline boxes illustrate by way of a thick dark arrow, the pose $P_{1..3}$ of a projection X-ray imaging system with respect to an anatomical structure 130. The pose $P_{1..3}$ is used to acquire the corresponding X-ray projection images $120_{1..3}$ that are illustrated in the lower portion of Fig. 6. The pose $P_{1..3}$ of the projection X-ray imaging system 140 is defined in the manner described above with reference to Fig. 4. In other words, the pose $P_{1..3}$ is defined by the orientation of a central ray of the projection X-ray imaging system with respect to the anatomical structure. The pose, $P_{1..3}$, may be defined by the angles a and b with respect to a coordinate system of the anatomical structure 130. The angle a may be defined as a rotational angle of the central ray of the projection X-ray imaging system around a longitudinal axis of the subject, and the angle b may be defined as a tilt angle of the central ray of the projection X-ray imaging system with respect to a cranial-caudal axis of the subject.

Referring initially to Fig. 6b; in this position, the pose $P_2$ is optimal for generating an X-ray projection image representing the ankle. With this optimal pose, the Fibula tip is aligned centrally with respect to the Tibia, and the projected joint gap $150_3$ between the Tibia and the Talus is visible continuously along the length of the articulating surface of the Tibia. The following projected sub-regions are visible in Fig. 6b with the optimal pose

$P_2$: a first projected region of the Tibia $150_1$, a second projected region of the Tibia $150_2$, a projected joint gap $150_3$ between the Tibia and the Talus, and an overlap between the Fibula and the Talus $150_5$. A size may be calculated for each of these projected sub-regions. The size may be an area, or a distance measurement, for each projected sub-region. By way of some examples, the area may be calculated as the total area of the projected sub-region, or as the area of a shape that is fitted to the projected sub-region, and the distance measurement may be calculated as a maximum, or a minimum, or a mean distance for the projected sub region, or a distance measurement of a shape that is fitted to the projected sub-region. The size may be calculated in terms of units such as (square) millimeters, (square) centimeters, and so forth, or it may be calculated in terms of another reference unit such as image pixels.

Referring now to Fig. 6a; in this illustration, the pose $P_1$ is obtained from the pose $P_2$ by rotating the projection X-ray imaging system anticlockwise around the y-axis of the anatomical structure by approximately 5 degrees. The pose $P_1$ is sub-optimal for generating an X-ray projection image representing the ankle. This is in-part because the joint projected joint gap $150_3$ between the Tibia and the Talus is no longer continuous along the length of the articulating surface of the Tibia. As compared to Fig. 6b, in Fig. 6a, the size of the first projected region of the Tibia $150_1$ has increased, and the size of the second projected region of the Tibia $150_2$ has decreased. The size of the overlap between the Fibula and the Talus $150_5$ has also decreased. Thus, the rotation of the projection X-ray imaging system anticlockwise around the y-axis of the anatomical structure to obtain the pose $P_2$, has resulted in a change in the sizes of the projected sub-regions $150_1$, $150_2$, $150_3$, and $150_5$.

Referring now to Fig. 6c; in this illustration, the pose $P_3$ is obtained from the pose $P_2$ by rotating the projection X-ray imaging system clockwise around the y-axis of the anatomical structure by approximately 5 degrees. The pose $P_3$ is sub-optimal for generating an X-ray projection image representing the ankle. This is in-part because the joint projected joint gap $150_3$ between the Tibia and the Talus is no longer continuous along the length of the articulating surface of the Tibia. As compared to Fig. 6b, in Fig. 6a, the size of the first projected region of the Tibia $150_1$ has decreased, and the size of the second projected region of the Tibia $150_2$ has increased. The size of the overlap between the Fibula and the Talus $150_5$ has also decreased. Thus, the rotation of the projection X-ray imaging system clockwise around the y-axis of the anatomical structure to obtain the pose $P_3$, has resulted in a change in the sizes of the projected sub-regions $150_1$, $150_2$, $150_3$, and $150_5$.

As may be appreciated from the above explanations, a consequence of the changes in the size of the projected sub-regions $150_{1..m}$ with rotation around the y-axis, is that the relative size of two or more of the projected sub-regions $150_{1..m}$ in the segmented X-ray projection image 120, may be used to determine the pose, $P_{1..3}$ of the projection X-ray imaging system with respect to the anatomical structure 130. For instance, the relative size of the projected sub-region $150_1$ in comparison to the size of the projected sub-region $150_2$, provides a measure of the rotation of the ankle around the y-axis of the anatomical structure. The relative size of the projected sub-region $150_4$ in comparison to the size of the projected sub-region $150_3$, also provides a measure of the rotation of the ankle around the y-axis of the anatomical structure. Other poses of the projection X-ray imaging system with respect to the anatomical structure 130 may be determined from the relative sizes of the projected sub-regions $150_{1..m}$ in a similar manner.

Various examples of the operation S130 in which the relative size of two or more of the projected sub-regions $150_{1..m}$ is used to generate the pose metric are described below. These include one approach in which the sizes of projected sub-regions are calculated from the X-ray projection image, and another approach in which the X-ray projection image 120 is inputted into a neural network, and the neural network is trained to generate a pose metric using ground truth values for the pose metric that are evaluated based on a relative size of two or more of the projected sub-regions in the segmented X-ray projection image.

In some examples, the pose metric represents the pose, P, of the projection X-ray imaging system 140 with respect to the anatomical structure 130. In some examples, the pose metric represents a suitability of the projection X-ray imaging system pose, P, for acquiring the X-ray projection image 120. In some examples, the pose metric represents feedback for adjusting the projection X-ray imaging system pose, P, in order to acquire a subsequent X-ray projection image representing the anatomical structure 130. The pose metric may also represent a combination of these examples.

Referring back to the method illustrated in Fig. 2; in the operation S140, the pose metric is outputted to provide the pose information for the X-ray projection image 120.

The pose metric may be outputted in various ways, including graphically, and audially. For instance, the pose metric may be outputted graphically to a display of a monitor, a tablet, or another device. By way of some examples, the pose of the projection X-ray imaging system 140 may be outputted graphically as an icon similar to that illustrated in the upper portion of Fig. 6. Feedback for adjusting the projection X-ray imaging system pose may be outputted in a similar manner by displaying an arrow indicating how the pose should be adjusted in order to obtain an improved image of the anatomical structure. Feedback for adjusting the projection X-ray imaging system pose may alternatively be outputted audially via a loudspeaker, headphones, and so forth. For instance, an audio message may be outputted such as "rotate X-ray source by ten degrees to the left", or "rotate ankle by 5 degrees to the left", and so forth. By way of some further examples, a suitability of the projection X-ray imaging system pose, P, for acquiring the X-ray projection image 120 may be outputted by outputting a color, or another visual indication indicating whether or not the pose is suitable. For instance, the X-ray projection image 120 may be provided with a red outline indicating that the pose is unsuitable, and a green outline indicating that the pose is indeed suitable.

In one example, the pose metric represents feedback for adjusting the projection X-ray imaging system pose, P, in order to acquire a subsequent X-ray projection image representing the anatomical structure 130, and the pose metric is used to automatically adjust the projection X-ray imaging system pose, P. In this example, the feedback is outputted to a control system that generates control signals for controlling one or more motors or actuators to adjust the pose of the projection X-ray imaging system that generated the X-ray projection image 120. The projection X-ray imaging system may include various sensors such as rotational encoders and position sensors that measure the pose of the projection X-ray imaging system, and which operate in combination with the one or more motors or actuators to provide the adjusted pose. In this example, the feedback may also be outputted to a user as a recommended pose, whereupon the pose is adjusted automatically in response to the user's acceptance of the recommended pose. This example has the benefit of obviating the need to manually re-position the projection X-ray imaging system and/or the patient in order to acquire the subsequent X-ray projection image, thereby saving time and improving workflow.

In one example, the pose metric may be outputted and stored with the X-ray projection image 120. The X-ray projection image 120 may be stored in a standardized format, such as the DICOM format. For instance, the pose metric may be stored together with the X-ray projection image 120 in a so-called "secondary capture" DICOM format or in a "presentation state" DICOM format. The pose metric and the X-ray projection image 120, in the secondary capture DICOM format or in the presentation state DICOM format may then be transmitted to a PACS viewing station for viewing by a radiologist. The pose metric and the X-ray projection image 120 may be displayed on the PACS viewing station as a secondary capture image, or as a presentation state image, or as a structured report, for example.

As mentioned above, in the operation S130, the relative size of two or more of the projected sub-regions $150_{1..m}$ is used to generate a pose metric for the X-ray projection image.

In one approach, the sizes of projected sub-regions are calculated from the X-ray projection image. In this approach, the sizes of projected sub-regions are calculated using an image processing technique. By way of an example, the relative sizes of the projected sub-regions $150_1$, and $150_2$ described above with reference to Fig. 6 may be measured and used as a measure of rotation of the projection X-ray imaging system around the y-axis of the anatomical structure 130, and thus a measure of the pose of the projection X-ray imaging system with respect to the anatomical structure. As the rotation of the projection X-ray imaging system is rotated clockwise around the y-axis throughout the sequence of Fig. 6a - Fig. 6c, the ratio of the size of the projected sub-region $150_1$ to the size of the projected sub-region $150_2$, decreases. The relative sizes of other projected sub-regions may be used to augment, and therefore improve the accuracy, of the pose that is determined from the projected sub-regions $150_1$, and $150_2$. For instance, the ratio of the size of the projected sub-region $150_5$ to the projected joint gap $150_3$ between the Tibia and the Talus also changes throughout the sequence of Fig. 6a - Fig. 6c, and also with rotation around the x-axis, and so this may also improve the accuracy, of the pose that is determined from the projected sub-regions $150_1$, and $150_2$.

As mentioned above, in one example, the pose metric represents the pose, P, of the projection X-ray imaging system 140 with respect to the anatomical structure 130. This example may be implemented by measuring, at multiple poses, the sizes of multiple projected sub-region $150_{1..m}$ for a reference anatomical structure such as that illustrated in Fig. 6, and generating a functional relationship between the relative sizes and the corresponding poses. The functional relationship could be provided by a graph, or a lookup table, for example. The graph, or lookup table may then be interrogated in order to determine the pose for a new projection X-ray image representing the anatomical structure.

As mentioned above, in another example, the pose metric represents a suitability of the projection X-ray imaging system pose, P, for acquiring the X-ray projection image 120. This example may be implemented in a similar manner by determining the pose, P, as described above, and by checking the pose against a range of poses that have been labelled in the functional relationship as being suitable for acquiring the X-ray projection image. In this example, the pose metric represents a suitability of the projection X-ray imaging system pose, P, for acquiring the X-ray projection image 120, and the operation of generating S130 a pose metric for the X-ray projection image 120 comprises comparing the relative size of the two or more projected sub-regions $150_{1..m}$ with at least one threshold value. In this example, the threshold value may define a range of poses that are suitable for acquiring the X-ray projection image 120. A radiologist may set the threshold value so as to define images that are clinically acceptable for imaging the anatomical structure.

As mentioned above, in another example, the pose metric represents feedback for adjusting the projection X-ray imaging system pose, P, in order to acquire a subsequent X-ray projection image representing the anatomical structure 130. This example may be implemented by calculating the pose for a new projection X-ray image as described above, and also calculating a pose adjustment as the difference between the calculated pose and a reference pose for acquiring an X-ray projection image representing the anatomical structure 130. With reference to Fig. 6, in this example, the calculation may result in a pose adjustment that is calculated as the difference between the pose values $P_1$ and $P_2$, or as the difference between the pose values $P_3$ and $P_2$; $P_2$ being the optimal pose for the anatomical structure.

In one example, the pose metric for the X-ray projection image 120 is determined based further on anatomical landmarks in the X-ray projection image. This provides redundancy to the determination of a pose metric based on a relative size of two or more of the projected sub-regions $150_{1..m}$ in the segmented X-ray projection image 120. This example is beneficial in improving the accuracy of the pose metric in situations in which the X-ray projection image does not permit an accurate segmentation in the operation S130. For instance, bone contours may be poorly visible with some poses, and with some X-ray imaging settings. For instance, anatomical variability, and implants in the anatomy, may result in the obstruction of image features in the X-ray projection image, confounding the segmentation operation. In this example, the method described with reference to Fig. 1 includes:

identifying a position of one or more anatomical landmarks $160_{1..n}$ in the X-ray projection image 120; and wherein the generating S 130 a pose metric for the X-ray projection image 120 is based further on the identified position of the one or more anatomical landmarks $160_{1..n}$.

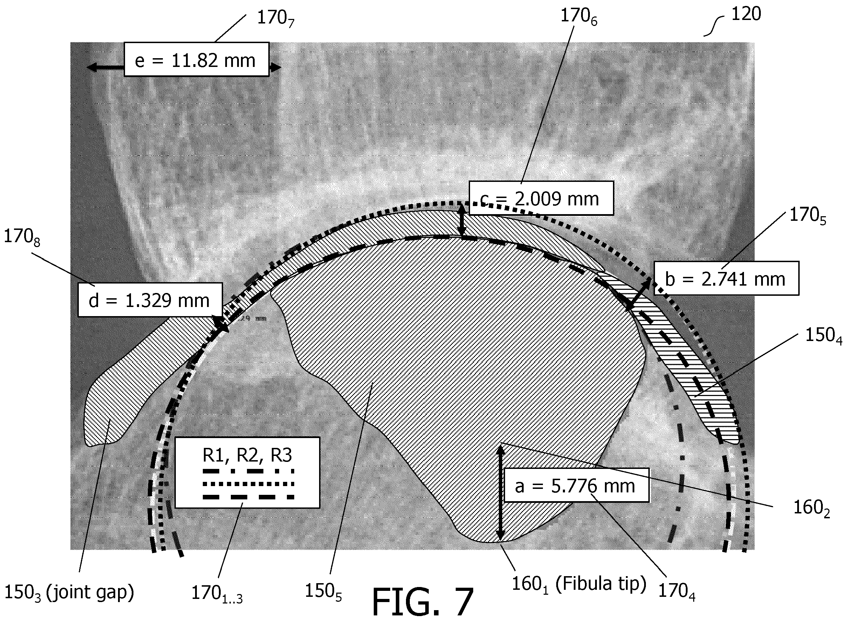

This example is described with reference to Fig. 7, which is an example of a segmented X-ray projection image 120 and includes examples of projected sub-regions $150_{1..m}$ of an anatomical structure, and examples of the positions of a plurality of anatomical landmarks $160_{1..n}$, in accordance with some aspects of the present disclosure. The segmented X-ray projection image 120 illustrated in Fig. 7 represents a magnified portion of Fig. 5 around the Fibula tip $160_1$, and includes the positions of the following anatomical landmarks: Fibula tip $160_1$, and the tip of the tibial malleolus $160_2$. As may be appreciated, the positions of the landmarks $160_{1..n}$ in the segmented X-ray projection image 120 illustrated in Fig. 7 change in accordance with changes in the pose of the projection X-ray imaging system with respect to the ankle that is represented in Fig. 5. For instance, as the pose is changed, the position of a single anatomical landmark in the projection X-ray image 120 changes with respect to the position of a projected sub-region $150_{1..m}$. Consequently, the pose metric for the X-ray projection image 120 may be generated based on the position of one or more anatomical landmarks $160_{1..n}$ in the X-ray projection image 120, as well as a relative size of two or more of the projected sub-regions $150_{1..m}$ in the segmented X-ray projection image 120. Similarly, if multiple anatomical landmarks are identified in the projection X-ray image 120, the positions of these landmarks may also be determined with respect to the position of one or more projected sub-regions $150_{1..m}$.

If multiple landmarks are identified in the X-ray projection image 120, further information may also be derived from the X-ray projection image 120 and used to generate the pose metric. For instance, in one example, distances between the positions of the plurality of anatomical landmarks $160_{1..n}$ may be measured. With reference to Fig. 7, in this example, a plurality of distances $170_{1..i}$ have been calculated between different anatomical landmarks. For instance, the distances $170_{1..3}$ represent radii of circular approximations of the two Talus and the lower Tibia condyles. The distance $170_4$ represents the distance between the Fibula tip and the tip of the tibial malleolus. The distance $170_5$ represents the posterior joint gap represented by the distance between the circular approximations of the Tibia condyle and the closer Talus condyle. The distance $170_6$ represents the central joint gap represented by the distance between the circular approximations of the Tibia condyle and the closer Talus condyle. The distance $170_8$ represents the anterior joint gap represented by the distance between the circular approximations of the Tibia condyle and the closer Talus condyle. The distance $170_7$ represents the anterior distance between Fibula and Tibia at defined significant positions. As may be appreciated, these distances vary in accordance with the pose of the X-ray imaging system that is used to generate the X-ray projection image 120 illustrated in Fig. 7, and consequently they may be used to characterize the pose of the X-ray imaging system. In another example, angles between trajectories that are defined by the plurality of anatomical landmarks may be measured, and these may be used in a similar manner to characterize the pose of the X-ray imaging system that is used to generate the X-ray projection image 120 illustrated in Fig. 7.

These two examples can be applied to different anatomical structures and more formally stated as follows: Let $\mathbf{u} \in \Omega$, with $\Omega \subset \mathbb{R}^2$ denote an image coordinate and $I: \Omega \to \mathbb{R}$ denotes a grayscale image. A mapping $F: \Omega \to \mathbb{R}^N$ is defined which assigns an anatomic region to every pixel u, where N is the number of anatomic regions. Furthermore, additional geometrical measures $\mathbf{V} \in \mathbb{R}^L$ are computed, where L is the number of additional measures. These measures can be distances or radii as shown in Fig. 7. In examples in which the pose metric represents feedback for adjusting the projection X-ray imaging system pose, in a second step, these anatomic segments are transformed by a mapping

$$\xi(F(\mathbf{u}), \mathbf{v}) \to \mathbb{R}^M$$, where M is the dimension of the feedback to correct the pose of the projection X-ray imaging system with respect to the anatomical structure. The mapping $\xi$ is a linear or non-linear mapping from anatomic structures and additional geometrical measures to pose feedback.

In another example, the positions of the anatomical landmarks $160_{1..n}$ in the X-ray projection image 120 are mapped to corresponding landmarks in a reference image, and the pose metric for the X-ray projection image is determined based on the mapped positions of the plurality of anatomical landmarks $160_{1..n}$ with respect to the corresponding landmarks in the reference image. In this example, the reference image is obtained by projecting a 3D model representing the anatomical structure using different poses of a projection X-ray imaging system with respect to the anatomical structure. The 3D model is projected in a virtual sense using a model of a projection X-ray imaging system in which the X-ray source and X-ray detector are arranged in the same manner as in the imaging system that was used to generate the X-ray projection image. The projected landmarks in the reference image appear in positions that are characteristic of the pose of the model of the projection X-ray imaging system that is used to generate the reference image. Consequently, by matching the positions of the anatomical landmarks $160_{1..n}$ in the X-ray projection image 120, with the corresponding landmarks in the reference image, the pose metric may also be determined.

Thus, in these examples, the method described with reference to Fig. 2 includes identifying a position of a plurality of anatomical landmarks $160_{1..n}$ in the X-ray projection image 120, and:

> measuring one or more distances $170_{i..1}$ between the positions of the plurality of anatomical landmarks $160_{1..n}$; and/or
> measuring an angle of one or more trajectories defined by the plurality of anatomical landmarks; and/or
> mapping the positions of the plurality of anatomical landmarks $160_{1..n}$ to a plurality of corresponding landmarks in a reference image;
> and wherein the generating S 130 a pose metric for the X-ray projection image 120 is based further on the measured one or more distances $170_{1..i}$ and/or the measured angle of the one or more trajectories and/or the mapped positions of the plurality of anatomical landmarks $160_{1..n}$ with respect to the corresponding landmarks in the reference image, respectively.

In these examples, the anatomical landmarks may be identified using various techniques. For instance, a feature detector, or an edge detector, or a model-based segmentation, or a neural network may be used to identify anatomical landmarks in the X-ray projection image 120.

In the examples described above, the X-ray projection image 120 may be scaled prior to determining the relative size of two or more of the projected sub-regions $150_{1..m}$ in the segmented X-ray projection image 120.

This reduces the influence on the pose metric from factors such as differences in subject size, and differences in the field of view of the projection X-ray imaging system. Thus, in one example, the operation of generating S130 a pose metric for the X-ray projection image 120 comprises scaling the X-ray projection image 120, and the relative size of two or more of the projected sub-regions $150_{1..m}$ is determined from the scaled X-ray projection image.

In this example, an area of the X-ray projection image 120 may be scaled based on a measurement of an area in the X-ray projection image 120. Alternatively, an area of the X-ray projection image 120 may be scaled based on a measurement of a distance in the X-ray projection image 120. The area of the X-ray projection image may be scaled based 120 on a measurement of an area in the X-ray projection image 120 in relation to a reference area. The reference area may be defined as the projected area of a portion of a bone with a known pose, for example. Similarly, the area of the X-ray projection image 120 may be scaled based on a measurement of a distance in the X-ray projection image 120 in relation to a reference distance. The reference distance may be defined as the length of a bone, or the width of a bone in a predetermined position along its length, for example.

In another approach, the X-ray projection image is inputted into a neural network, and the neural network is trained to generate a pose metric using ground truth values for the pose metric that are evaluated based on a relative size of two or more of the projected sub-regions in the segmented X-ray projection image. In this approach, the pose metric may likewise represent: the pose, P, of the projection X-ray imaging system 140 with respect to the anatomical structure 130, and/or a suitability of the projection X-ray imaging system pose, P, for acquiring the X-ray projection image 120, and/or feedback for adjusting the projection X-ray imaging system pose, P, in order to acquire a subsequent X-ray projection image representing the anatomical structure 130.

In this approach, the operation of generating S130 a pose metric for the X-ray projection image 120 comprises:

> inputting segmented image data representing the segmented X-ray projection image into a second neural network NN2; and
> generating the pose metric using the second neural network NN2 in response to the inputting; and
> wherein the second neural network NN2 is trained to generate the pose metric from the segmented image data using X-ray projection image training data, the X-ray projection image training data comprising a plurality of segmented X-ray projection images representing the anatomical structure 130, and corresponding ground truth values for the pose metric, the ground truth values for the pose metric being evaluated based on a relative size of two or more of the projected sub-regions in the segmented X-ray projection image.

This approach is described with reference to Fig. 8, which is a schematic diagram illustrating an example of a method of providing pose information for X-ray projection images and wherein X-ray projection data 110 comprising an X-ray projection image is inputted into a first neural network NN1 in order to segment the X-ray projection image, and wherein segmented image data representing the segmented image, is inputted into a second neural network NN2 in order to generate a pose metric for the X-ray projection image, in accordance with some aspects of the present disclosure.

With reference to Fig. 8, in this approach, segmented image data representing the segmented X-ray projection image is inputted into a second neural network NN2. In the example illustrated in Fig. 8, the segmented image data is obtained by inputting the X-ray projection data 110, into a first neural network NN1. The first neural network NN1 is trained to segment X-ray projection images representing the anatomical structure 130. As mentioned above, an example of a neural network that may be used to segment X-ray projection images in the operation S120 is disclosed in the document by Krönke, S., et al., "CNN-based pose estimation for assessing quality of ankle-joint X-ray images", Proc. SPIE 12032, Medical Imaging 2022: Image Processing, 120321A (2022). The neural network NN1 may be provided by various architectures, including for example a convolutional neural network "CNN", encoder-decoder based models, recurrent neural network "RNN" based models, and generative models with adversarial training "GANs". It is noted that instead of using a neural network, i.e. NN1, to obtain the segmented image data, the segmented image data may be obtained using a segmentation algorithm such as the model-based segmentation, watershed-based segmentation, region growing, level sets or graph cuts, as described above.

The segmented image data is then inputted into a second neural network NN2. The second neural network NN2 may be provided by various different architectures, including for example a CNN, ResNet, U-Net, and encoder-decoder architectures.

The second neural network NN2 is trained to generate the pose metric from the segmented image data using X-ray projection image training data. The X-ray projection image training data comprises a plurality of segmented X-ray projection images representing the anatomical structure 130, and corresponding ground truth values for the pose metric. The X-ray projection image training data may include some tens, hundreds, or thousands, or more, segmented X-ray projection images representing the anatomical structure 130. The X-ray projection image training data may include data from subjects with a variety of ages, body mass index "BMI" values, different genders, and different pathologies. The segmented X-ray projection images that are used in the training data may be obtained by segmenting X-ray projection images. The segmentation may be performed manually by an expert, or using various segmentation algorithms such as those mentioned above. The ground truth values for the pose metric are evaluated based on a relative size of two or more of the projected sub-regions in the segmented X-ray projection image. In this regard, the relative size may be calculated using the image processing technique described above, and used to determine values for one or more of: the pose, P, of the projection X-ray imaging system 140 with respect to the anatomical structure 130, the suitability of the projection X-ray imaging system pose, P, for acquiring the X-ray projection image 120, and feedback for adjusting the projection X-ray imaging system pose, P, in order to acquire a subsequent X-ray projection image representing the anatomical structure 130. The pose metric may be calculated using the techniques described above. During training, the ground truth value of the pose metric, and optionally also the relative size of two or more of the projected sub-regions in the segmented X-ray projection image that is used to derive the pose metric, are inputted into the neural network.

The training of a neural network involves inputting a training dataset into the neural network, and iteratively adjusting the neural network's parameters until the trained neural network provides an accurate output. Training is often performed using a Graphics Processing Unit "GPU" or a dedicated neural processor such as a Neural Processing Unit "NPU" or a Tensor Processing Unit "TPU". Training often employs a centralized approach wherein cloud-based or mainframe-based neural processors are used to train a neural network. Following its training with the training dataset, the trained neural network may be deployed to a device for analyzing new input data during inference. The processing requirements during inference are significantly less than those required during training, allowing the neural network to be deployed to a variety of systems such as laptop computers, tablets, mobile phones and so forth. Inference may for example be performed by a Central Processing Unit "CPU", a GPU, an NPU, a TPU, on a server, or in the cloud.

The process of training the neural network NN2 described above therefore includes adjusting its parameters. The parameters, or more particularly the weights and biases, control the operation of activation functions in the neural network. In supervised learning, the training process automatically adjusts the weights and the biases, such that when presented with the input data, the neural network accurately provides the corresponding expected output data. In order to do this, the value of the loss functions, or errors, are computed based on a difference between predicted output data and the expected output data. The value of the loss function may be computed using functions such as the negative log-likelihood loss, the mean absolute error (or L1 norm), the mean squared error, the root mean squared error (or L2 norm), the Huber loss, or the (binary) cross entropy loss. During training, the value of the loss function is typically minimized, and training is terminated when the value of the loss function satisfies a stopping criterion. Sometimes, training is terminated when the value of the loss function satisfies one or more of multiple criteria.

Various methods are known for solving the loss minimization problem such as gradient descent, Quasi-Newton methods, and so forth. Various algorithms have been developed to implement these methods and their variants including but not limited to Stochastic Gradient Descent "SGD", batch gradient descent, mini-batch gradient descent, Gauss-Newton, Levenberg Marquardt, Momentum, Adam, Nadam, Adagrad, Adadelta, RMSProp, and Adamax "optimizers" These algorithms compute the derivative of the loss function with respect to the model parameters using the chain rule. This process is called backpropagation since derivatives are computed starting at the last layer or output layer, moving toward the first layer or input layer. These derivatives inform the algorithm how the model parameters must be adjusted in order to minimize the error function. That is, adjustments to model parameters are made starting from the output layer and working backwards in the network until the input layer is reached. In a first training iteration, the initial weights and biases are often randomized. The neural network then predicts the output data, which is likewise, random. Backpropagation is then used to adjust the weights and the biases. The training process is performed iteratively by making adjustments to the weights and biases in each iteration. Training is terminated when the error, or difference between the predicted output data and the expected output data, is within an acceptable range for the training data, or for some validation data. Subsequently the neural network may be deployed, and the trained neural network makes predictions on new input data using the trained values of its parameters. If the training process was successful, the trained neural network accurately predicts the expected output data from the new input data.

As mentioned above, in one example, the pose metric represents a suitability of the projection X-ray imaging system pose, P, for acquiring the X-ray projection image. In this example, the second neural network NN2 is trained to generate the pose metric from the segmented X-ray projection image, by:

> receiving the X-ray projection image training data;
> inputting the X-ray projection image training data into the second neural network NN2; and
> for each of a plurality of the segmented X-ray projection images:
>
>> predicting a value of the pose metric using the second neural network NN2;
>> adjusting parameters of the second neural network NN2 based on a difference between the predicted value of the pose metric and the ground truth value of the pose metric; and

> repeating the predicting, and the adjusting, until a stopping criterion is met.

These operations may be performed in accordance with the backpropagation technique described above. In this example, the ground truth value of the pose metric, i.e. the suitability, may be evaluated automatically, or manually by an expert reviewer, based on a relative size of two or more of the projected sub-regions in the segmented X-ray projection image. The ground truth value of the pose metric may also be determined based on one or more additional criteria.

As mentioned above, in another example, the pose metric represents feedback for adjusting the projection X-ray imaging system pose, P, in order to acquire a subsequent X-ray projection image representing the anatomical structure 130. In this example, the ground truth value of the pose metric comprises one or more pose adjustments for adjusting the pose of the projection X-ray imaging system in order to acquire an X-ray projection image representing the anatomical structure with a target pose with respect to the anatomical structure. The second neural network is trained to generate the pose metric from the segmented X-ray projection image, by:

> receiving the X-ray projection image training data;
> inputting the X-ray projection image training data into the second neural network; and
> for each of a plurality of the segmented X-ray projection images:
>
>> predicting a value of the pose metric using the second neural network, the value of the pose metric comprising one or more pose adjustments for adjusting the pose of the projection X-ray imaging system in order to acquire an X-ray projection image representing the anatomical structure with a target pose with respect to the anatomical structure;
>> adjusting parameters of the second neural network based on a difference between the predicted value of the pose metric and the ground truth value of the pose metric; and
>> repeating the predicting, and the adjusting, until a stopping criterion is met.

These operations may be performed in accordance with the backpropagation technique described above. In this example, the ground truth value of the pose metric, i.e. the feedback, may be determined automatically, or manually by an expert reviewer, based on a relative size of two or more of the projected sub-regions in the segmented X-ray projection image. The ground truth value of the pose metric may also be determined based on one or more additional criteria. Thus, given the actual sizes of the projected sub-regions, it is calculated how to adjust the current pose to acquire a subsequent X-ray projection image representing the anatomical structure 130 in which the relative sizes of the projected sub-regions are within a predetermined range for the anatomical region. The predetermined range may be set for the subsequent X-ray projection image such that the resulting X-ray projection image provides a preferred, or clinically-acceptable, image.

In another example, the method described above with reference to Fig. 2 also includes generating a value of a second pose metric. The value of the second pose metric is used to adapt the value of the pose metric. In this example, both the pose metric described above with reference to Fig. 2, and the second pose metric, represent a suitability of the projection X-ray imaging system pose, P, for acquiring the X-ray projection image 120. However, the second pose metric is evaluated based on a size of a gap between two bones in the X-ray projection image, or the segmented X-ray projection image. The second pose metric is evaluated based on a different criterion to the pose metric described above with reference to Fig. 1, and can be used to over-ride the assessment that is provided by the pose metric.

In this example, the pose metric represents a suitability of the X-ray imaging system pose, P, for acquiring the X-ray projection image 120, and the method described with reference to Fig. 1 includes:

calculating a value of a second pose metric for the X-ray projection image 120 based on a size of a gap $150_3$ between two bones in the X-ray projection image 120, the value of the second pose metric representing a suitability of the X-ray imaging system pose, P, for acquiring the X-ray projection image 120; and wherein the generating S130 a pose metric for the X-ray projection image 120, is based further on the value of the second pose metric.

In this example, the value of the second pose metric is used to adapt the value of the first pose metric. In this regard, if the value of the second pose metric indicates that the X-ray imaging system pose, P, is indeed suitable for acquiring the X-ray projection image 120 based on the size of the gap $150_3$ between two bones in the X-ray projection image 120, the pose metric that is outputted in the operation S140, is adapted from "unsuitable" to "suitable". Thus, if the value of the second pose metric indicates that the pose is suitable for the X-ray projection image, it over-rides the original assessment of the pose metric.

An example of a gap between two bones in an X-ray projection image 120 is the gap $150_3$ between the Tibia and the Talus in the X-ray projection image 120 illustrated in Fig. 5. The size of the gap $150_3$ may be calculated as an area, or a distance measurement, for the gap. The size of the gap may be calculated in a similar manner to the size of a projected sub-regions $150_{1..m}$, as described above.

The value of the second pose metric may be calculated using approaches that are similar to the approaches described above for the pose metric. Thus, in one approach, an image processing technique is used to calculate the size of a gap between two bones in the X-ray projection image. Alternatively, in another approach that is described in more detail below, a neural network is trained to generate the value of the second pose metric from the X-ray projection data.

In the image processing approach, image processing techniques may be used to calculate the size of the gap $150_3$ between two bones in the X-ray projection image 120. The value of the second pose metric may be calculated based on this size in various ways. In general, a larger value of the size corresponds to a higher level of suitability of the pose for the X-ray projection image. Thus, in one example, the size may be used directly as an analogue value of the second pose metric. In another example, the size may be digitized based on one or more threshold values and used to generate discrete categories for the value for the second pose metric. In this example, the discrete categories correspond to different levels of suitability.

As mentioned above, in another approach, a neural network is trained to generate the value of the second pose metric from the X-ray projection data. In this approach, the operation of calculating a value of a second pose metric comprises:

inputting X-ray projection data representing the X-ray projection image 120, or the segmented X-ray projection image, into a third neural network NN3; and generating the value of the second pose metric using the third neural network NN3 in response to the inputting; and wherein the third neural network NN3 is trained to generate the value of the second pose metric from the X-ray projection data using X-ray projection image training data, the X-ray projection image training data comprising a plurality of X-ray projection images, or segmented X-ray projection images, representing the anatomical structure 130, and corresponding ground truth values for the second pose metric, the ground truth values for the second pose metric being evaluated based on a size of a gap between two bones in the X-ray projection image, or the segmented X-ray projection image.

With reference to the lower portion of Fig. 8, in this example, X-ray projection data representing the X-ray projection image 120, or the segmented X-ray projection image, is inputted into the third neural network NN3, as indicated by the dashed lines in Fig. 8. As mentioned above, the segmented X-ray projection image may be generated using the neural network NN1, or alternatively using various segmentation algorithms.

The third neural network NN3 may be provided by various architectures, including for example a convolutional neural network "CNN", ResNet, U-Net, and encoder-decoder architectures. An example of a neural network that may be trained for this purpose is disclosed in a document by Mairhofer, D., et al., "An AI-based Framework for Diagnostic Quality Assessment of Ankle Radiographs", Proceedings of Machine Learning Research 143:484-496, 2021.

The third neural network NN3 is trained to generate the second pose metric from the X-ray projection data using X-ray projection image training data. The X-ray projection image training data comprises a plurality of X-ray projection images, or segmented X-ray projection images, representing the anatomical structure 130, and corresponding ground truth values for the second pose metric. The X-ray projection image training data may include some tens, hundreds, or thousands, or more, segmented X-ray projection images representing the anatomical structure 130. The X-ray projection image training data may include data from subjects with a variety of ages, body mass index "BMI" values, different genders, and different pathologies. The ground truth values for the second pose metric are evaluated based on a size of a gap between two bones in the X-ray projection image, or the segmented X-ray projection image. The ground truth values for the second pose metric are evaluated by determining, using the image processing method described above, the size of a gap between two bones in the X-ray projection image, or in the segmented X-ray projection image. In this regard, the size of the gap is calculated and used to determine values for a suitability of the X-ray imaging system pose, P, for acquiring the X-ray projection image 120. The second pose metric may be calculated for the (segmented) X-ray projection images using the techniques described above. Thus, size may be used directly as an analogue value of the second pose metric, or the size may be digitized based on one or more threshold values and used to generate discrete categories for the value for the second pose metric. During training, the ground truth value of the pose metric, and optionally also the relative size of two or more of the projected sub-regions in the segmented X-ray projection image that is used to derive the pose metric, are inputted into the third neural network NN3.

In this example, the third neural network NN3 is trained to generate the value of the second pose metric from the X-ray projection data, by:

> receiving the X-ray projection image training data;
> inputting the X-ray projection image training data into the third network NN3; and
> for each of a plurality of the X-ray projection images, or segmented X-ray projection images:

>> predicting a value of the second pose metric using the third neural network NN3;
>> adjusting parameters of the third neural network NN3 based on a difference between the predicted value of the second pose metric and the ground truth value of the second pose metric; and

repeating the predicting, and the adjusting, until a stopping criterion is met.

These operations may be performed in accordance with the backpropagation technique described above.

In another example, a computer program product, is provided. The computer program product comprises instructions which when executed by one or more processors, cause the one or more processors to carry out a method of providing pose information for X-ray projection images. The method comprises:

> receiving S110 X-ray projection data 110, the X-ray projection data comprising an X-ray projection image 120 representing an anatomical structure 130, the X-ray projection data being acquired by a projection X-ray imaging system 140 having a corresponding pose, P, with respect to the anatomical structure 130;
> segmenting S120 the X-ray projection image 120 to identify a plurality of projected sub-regions $150_{1..m}$ of the anatomical structure 130;
> generating S130 a pose metric for the X-ray projection image 120 based on a relative size of two or more of the projected sub-regions $150_{1..m}$ in the segmented X-ray projection image 120; and
> outputting S140 the pose metric to provide the pose information for the X-ray projection image 120.

In another example, a system 200 for providing pose information for X-ray projection images, is provided. The system includes one or more processors 210 configured to:

> receive S110 X-ray projection data 110, the X-ray projection data comprising an X-ray projection image 120 representing an anatomical structure 130, the X-ray projection data being acquired by a projection X-ray imaging system 140 having a corresponding pose, P, with respect to the anatomical structure 130;
> segment S120 the X-ray projection image 120 to identify a plurality of projected sub-regions $150_{1..m}$ of the anatomical structure 130;
> generate S130 a pose metric for the X-ray projection image 120 based on a relative size of two or more of the projected sub-regions $150_{1..m}$ in the segmented X-ray projection image 120; and
> output S140 the pose metric to provide the pose information for the X-ray projection image 120.

An example of the system 200 is illustrated in Fig. 3. It is noted that the system 200 may also include one or more of: a projection X-ray imaging system 140 for generating the X-ray projection data 110; a user interface device (not illustrated in Fig. 3) for receiving user input in relation to the operations performed by the one or more processors 210, such as a keyboard, a mouse, a touchscreen, and so forth; a patient bed (not illustrated in Fig. 3); and a monitor (not illustrated in Fig. 3) for displaying the X-ray projection image 120, the outputted pose metric, and further data relating to the operations performed by the one or more processors 210.

The above examples are to be understood as illustrative of the present disclosure, and not restrictive. Further examples are also contemplated. For instance, the examples described in relation to the computer-implemented method may also be provided by the computer program product, or by the computer-readable storage medium, or by the X-ray imaging system, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A computer-implemented method of providing pose information for X-ray projection images, the method comprising:

    receiving (S110) X-ray projection data (110), the X-ray projection data comprising an X-ray projection image (120) representing an anatomical structure (130), the X-ray projection data being acquired by a projection X-ray imaging system (140) having a corresponding pose (P) with respect to the anatomical structure (130);
    segmenting (S120) the X-ray projection image (120) to identify a plurality of projected sub-regions ($150_{1..m}$) of the anatomical structure (130);

    generating (S130) a pose metric for the X-ray projection image (120) based on a relative size of two or more of the projected sub-regions ($151_{1..m}$) in the segmented X-ray projection image (120); and
    outputting (S140) the pose metric to provide the pose information for the X-ray projection image (120).

2. The computer-implemented method according to claim 1, wherein the projected sub-regions ($150_{1..m}$) of the anatomical structure (130) represent one or more of: a portion of a bone ($150_{1..2}$, $150_{4..6}$), and a space between two bones ($150_3$).

3. The computer-implemented method according to claim 1 or claim 2, wherein the anatomical structure (130) comprises a plurality of bones, and wherein at least one of the two or more projected sub-regions is defined at least in part by:

    a perimeter of a portion of at least one of the bones in the X-ray projection image ($150_{1..6}$); and/or
    an intersection between the plurality of bones in the X-ray projection image ($150_1$, $150_2$); and/or
    an intersection between a space between two bones ($150_3$) and a further bone in the X-ray projection image (120).

4. The computer-implemented method according to any one of claims 1 - 3, wherein the segmenting (S120) the X-ray projection image (120) to identify a plurality of projected sub-regions ($150_{1..m}$) of the anatomical structure (130) comprises:

    applying a segmentation algorithm to the received X-ray projection data (110); or
    inputting the received X-ray projection data (110) into a first neural network (NN1); and
    wherein the first neural network (NN1) is trained to segment X-ray projection images representing the anatomical structure (130).

5. The computer-implemented method according to claim 1, wherein the pose metric represents the pose (P) of the projection X-ray imaging system (140) with respect to the anatomical structure (130) and/or wherein the pose metric represents a suitability of the projection X-ray imaging system pose (P) for acquiring the X-ray projection image (120) and/or wherein the pose metric represents feedback for adjusting the projection X-ray imaging system pose (P) in order to acquire a subsequent X-ray projection image representing the anatomical structure (130).

6. The computer-implemented method according to any previous claim, wherein the pose metric represents a suitability of the projection X-ray imaging system pose (P) for acquiring the X-ray projection image (120); and
wherein the generating (S130) a pose metric for the X-ray projection image (120) comprises comparing the relative size of the two or more projected sub-regions ($150_{1..m}$) with at least one threshold value.

7. The computer-implemented method according to any previous claim, wherein the method further comprises:

identifying a position of one or more anatomical landmarks ($160_{1..n}$) in the X-ray projection image ($120$); and

wherein the generating (S130) a pose metric for the X-ray projection image ($120$) is based further on the identified position of the one or more anatomical landmarks ($160_{1..n}$).

8. The computer-implemented method according to claim 7, wherein the method comprises identifying a position of a plurality of anatomical landmarks ($160_{i..n}$) in the X-ray projection image ($120$); and wherein the method further comprises:

measuring one or more distances ($170_{i..1}$) between the positions of the plurality of anatomical landmarks ($160_{i..n}$); and/or

measuring an angle of one or more trajectories defined by the plurality of anatomical landmarks; and/or

mapping the positions of the plurality of anatomical landmarks ($160_{1..n}$) to a plurality of corresponding landmarks in a reference image;

and wherein the generating (S130) a pose metric for the X-ray projection image ($120$) is based further on the measured one or more distances ($170_{1..i}$) and/or the measured angle of the one or more trajectories and/or the mapped positions of the plurality of anatomical landmarks ($160_{1..n}$) with respect to the corresponding landmarks in the reference image, respectively.

9. The computer-implemented method according to any previous claim, wherein the generating (S130) a pose metric for the X-ray projection image ($120$) comprises scaling the X-ray projection image ($120$); and wherein the relative size of two or more of the projected sub-regions ($150_{1..m}$) is determined from the scaled X-ray projection image.

10. The computer-implemented method according to claim 9, wherein the scaling the X-ray projection image comprises:

scaling an area of the X-ray projection image based ($120$) on a measurement of an area in the X-ray projection image ($120$); or

scaling an area of the X-ray projection image ($120$) based on a measurement of a distance in the X-ray projection image ($120$).

11. The computer-implemented method according to claim 1, wherein the generating (S130) a pose metric for the X-ray projection image ($120$) comprises:

inputting segmented image data representing the segmented X-ray projection image into a second neural network (NN2); and generating the pose metric using the second neural network (NN2) in response to the inputting; and

wherein the second neural network (NN2) is trained to generate the pose metric from the segmented image data using X-ray projection image training data, the X-ray projection image training data comprising a plurality of segmented X-ray projection images representing the anatomical structure ($130$), and corresponding ground truth values for the pose metric, the ground truth values for the pose metric being evaluated based on a relative size of two or more of the projected sub-regions in the segmented X-ray projection image.

12. The computer-implemented method according to claim 11, wherein the pose metric represents a suitability of the projection X-ray imaging system pose (P) for acquiring the X-ray projection image, and wherein the second neural network (NN2) is trained to generate the pose metric from the segmented X-ray projection image, by:

receiving the X-ray projection image training data;

inputting the X-ray projection image training data into the second neural network (NN2); and

for each of a plurality of the segmented X-ray projection images:

predicting a value of the pose metric using the second neural network (NN2);

adjusting parameters of the second neural network (NN2) based on a difference between the predicted value of the pose metric and the ground truth value of the pose metric; and

repeating the predicting, and the adjusting, until a stopping criterion is met.

13. The computer-implemented method according to claim 11, wherein the pose metric represents feedback for adjusting the projection X-ray imaging system pose (P) in order to acquire a subsequent X-ray projection image representing the anatomical structure ($130$), and wherein the ground truth value of the pose metric comprises one or more pose adjustments for adjusting the pose of the projection X-ray imaging system in order to acquire an X-ray projection image representing the anatomical structure with a target pose with respect to the anatomical structure; and

wherein the second neural network is trained to generate the pose metric from the segmented X-ray projection image, by:

receiving the X-ray projection image training data;

inputting the X-ray projection image training data into the second neural network; and for each of a plurality of the segmented X-ray projection images:

predicting a value of the pose metric using the second neural network, the value of the pose metric comprising one or more pose adjustments for adjusting the pose of the projection X-ray imaging system in order to acquire an X-ray projection image representing the anatomical structure with a target pose with respect to the anatomical structure;

adjusting parameters of the second neural network based on a difference between the predicted value of the pose metric and the ground truth value of the pose metric; and repeating the predicting, and the adjusting, until a stopping criterion is met.

14. The computer-implemented method according to claim 1, wherein the pose metric represents a suitability of the X-ray imaging system pose (P) for acquiring the X-ray projection image (120), and wherein the method further comprises:

calculating a value of a second pose metric for the X-ray projection image (120) based on a size of a gap ($150_3$) between two bones in the X-ray projection image (120), the value of the second pose metric representing a suitability of the X-ray imaging system pose (P) for acquiring the X-ray projection image (120);

and wherein the generating (S130) a pose metric for the X-ray projection image (120), is based further on the value of the second pose metric.

15. The computer-implemented method according to claim 14, wherein the calculating a value of a second pose metric comprises:

inputting X-ray projection data representing the X-ray projection image (120), or the segmented X-ray projection image, into a third neural network (NN3); and

generating the value of the second pose metric using the third neural network (NN3) in response to the inputting; and

wherein the third neural network (NN3) is trained to generate the value of the second pose metric from the X-ray projection data using X-ray projection image training data, the X-ray projection image training data comprising a plurality of X-ray projection images, or segmented X-ray projection images, representing the anatomical structure (130), and corresponding ground truth values for the second pose metric, the ground truth values for the second pose metric being evaluated based on a size of a gap between two bones in the X-ray projection image, or the segmented X-ray projection image.

FIG. 1

FIG. 2

FIG. 3

FIG. 4

FIG. 5

FIG. 6 a) b) c)

FIG. 7

EP 4 336 450 A1

FIG. 8

Europäisches
Patentamt

European
Patent Office

Office européen
des brevets

# EUROPEAN SEARCH REPORT

Application Number

EP 22 19 4639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KRÖNKE SVEN ET AL: "CNN-based pose estimation for assessing quality of ankle-joint X-ray images", PROGRESS IN BIOMEDICAL OPTICS AND IMAGING, SPIE – INTERNATIONAL SOCIETY FOR OPTICAL ENGINEERING, BELLINGHAM, WA, US, vol. 12032, 4 April 2022 (2022-04-04), pages 120321A-120321A, XP060156232, ISSN: 1605-7422, DOI: 10.1117/12.2611734 ISBN: 978-1-5106-0027-0 | 1-12 | INV. G06T7/73 |
| A | * abstract * * figures 1,3 * * sections 3, 3.1, 3.2, 3.3 * | 13-15 | |
| X | WO 2020/038917 A1 (METAMORPHOSIS GMBH [DE]) 27 February 2020 (2020-02-27) | 1-13 | |
| Y | * abstract * | 1-12 | |
| A | * figures 1,3B * * page 1, paragraph 1 * * page 2, last paragraph * * page 3, paragraph 2 – page 4, paragraph 2 * * page 11, paragraph 1 * * page 12, paragraph 3 * | 14,15 | |

TECHNICAL FIELDS
SEARCHED      (IPC)

G06T
G06K
G06V

The present search report has been drawn up for all claims

| Place of search | Date of completion of the search | Examiner |
|---|---|---|
| Munich | 6 October 2022 | Scholz, Volker |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 22 19 4639

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2022

| Patent document cited in search report | | Publication date | Patent family member(s) | | Publication date |
|---|---|---|---|---|---|
| WO 2020038917 | A1 | 27-02-2020 | EP | 3841556 A1 | 30-06-2021 |
| | | | LU | 100907 B1 | 24-02-2020 |
| | | | US | 2021295553 A1 | 23-09-2021 |
| | | | WO | 2020038917 A1 | 27-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019183438 A1

**Non-patent literature cited in the description**

- **KROENKE, S. et al.** CNN-based pose estimation for assessing quality of ankle-joint X-ray images. *Proc. SPIE 12032, Medical Imaging 2022: Image Processing,* 2022, 120321A
- **KRÖNKE, S. et al.** CNN-based pose estimation for assessing quality of ankle-joint X-ray images. *Proc. SPIE 12032, Medical Imaging 2022: Image Processing,* 2022, 120321A

- **MAIRHOFER, D. et al.** An AI-based Framework for Diagnostic Quality Assessment of Ankle Radiographs. *Proceedings of Machine Learning Research,* 2021, vol. 143, 484-496